# EUROPEAN PATENT SPECIFICATION

(11) **EP 2 432 636 B1**
(45) Date of publication and mention of the grant of the patent: **27.11.2013**
(21) Application number: 10720670.8
(22) Date of filing: 18.05.2010
(51) Int. Cl.: B32B 17/10, C03C 27/12

(54) **LAMINATED GLAZING**
VERBUNDVERGLASUNG
VITRAGE FEUILLETÉ

(30) Priority: 19.05.2009 GB 0908577
(43) Date of publication of application: 28.03.2012
(73) Proprietor: Pilkington Group Limited, St. Helens Merseyside WA10 3TT (GB)
(72) Inventor: HOLLAND, John, Richard, Lancashire L40 1SZ (GB); HOLDEN, David, William, Greater Manchester WN5 8HP (GB); HOLSCHER, Heinz, Wilhelm, D-45711 Datteln (DE)
(74) Representative: Marsh, Andrew James
(86) International application number: PCT/GB2010/050808
(87) International publication number: WO 2010/133872

(56) References cited:
- EP-A1- 0 590 978
- EP-A2- 1 205 524
- DE-A1- 19 543 148
- DE-A1-102007 020 537
- US-B1- 6 709 750

## Description

The present invention relates to fire-resistant laminated glazings comprising at least two glazing panes and at least one interlayer between the glazing panes. The present invention also relates to processes for producing such fire-resistant laminated glazings.

The production of cast-in-place (CIP) laminated glazings is characterized in that at least two sheets of glass are assembled together to form a sealed cell with a hollow cavity in between the sheets. This cavity is then filled with a liquid resin which may contain aqueous alkali metal silicate solution. The alkali metal silicate solution is then cured by heat, UV or chemical reaction to form an interlayer.

The spacer materials used to produce this type of glass cell may be of several different forms including preformed solid or foam tapes with adhesive surfaces, pre-extruded self adhesive materials (e.g. acrylic or butyl rubber sealant tapes) or thermoplastic spacer (TPS) a liquid polymer extruded directly on to the glass substrate at relatively high temperature. TPS may use butyl rubber polymers in combination with polyisobutylene, carbon black and other additives.

In current commercial, fire resistant cast-in-place glazing applications the standard manufacturing technique uses preformed tapes often with e.g. acrylic adhesives on the surfaces for production of organic resin interlayer laminates and uses TPS technology for aqueous alkali metal silicate containing interlayer laminates.

When alternatives to the TPS system are used with aqueous alkali metal silicate solutions, bubbles often form along the interlayer-tape interface and the glass-tape interface after high temperature oven curing. This results in optical defects and means that conventional spacer materials are unsuitable for this application. The cause of this edge bubble problem may be air or low molecular weight organic gases which are released after entrapment in either the tape or the adhesive material. It is possible that leaks may also be involved. This problem is further amplified when toughened glasses are laminated because toughened glass often has greater surface distortions than ordinary, float glass. These distortions can cause poor contact of the adhesive material on the glass leading to air entrapment and so amplifying the edge bubble problem after heat curing.

The use of TPS technology enables relatively uneven toughened glasses to be used and can minimise edge bubbles after curing. This is because TPS is applied hot to one glass substrate and the second glass is pressed on to the TPS whilst the TPS material is still hot and tacky, resulting in a good seal. The amount of pressure exerted in assembling the glasses together is accurately controlled to ensure a consistent spacing between the glasses. Also, because the TPS material has been extruded at high temperature i.e. 130-160°C there is little air entrained as the solubility of air in the liquid TPS composition at this high temperature is low. Low molecular weight volatile gases are also removed by this process. Nevertheless, a small number of bubbles can still be observed directly after oven curing even using TPS technology. Furthermore, TPS technology requires expensive capital investment in bulky equipment which is unsuitable for many applications.

An aim of the present invention is to reduce the problems associated with the prior art, avoiding the need for TPS technology, and to provide laminated glazings in which the edge bubble problem is reduced or eliminated.

The present invention accordingly provides, in a first aspect, a fire-resistant laminated glazing comprising at least two glazing panes and at least one transparent intumescent interlayer between the glazing panes, said glazing panes being separated by a spacer extending at least partially around their peripheries so as to define a cavity to contain said interlayer, wherein the spacer comprises a shim for controlling the separation between the glazing panes to a predetermined distance and a rubber portion at least partially enclosing the shim, and wherein the interlayer comprises an alkali metal silicate, wherein the amount of gas in the rubber portion is such that no bubbles occur at an interlayer-spacer interface and at a glass-spacer interface.

Preferably, the rubber portion of the spacer comprises butyl rubber and/or polyisobutylene.

The rubber portion of the spacer may also contain other components including desiccants (which are advantageous because desiccants may further reduce water migration through or around the seal), fillers (for example carbon black, magnesium hydroxide or silica), surfactants (e.g. as processing aids) or other additives.

It is preferred if the shim comprises metal, plastics or some other material which is generally resistant to compression in the application to which the invention is directed. The cross section of the shim in the spacer may be generally any suitable shape. However, preferably the cross section is circular or oval, generally square or rectangular or, alternatively, the shim may be corrugated. Corrugated shims are preferably orientated in the spacer so that the corrugation reduces compression of the shim but ensures lateral flexibility so that the spacer with the shim incorporated within it may be relatively easily bent around the periphery of the glazing panes.

Preferably, the interlayer comprises a curable resin.

The predetermined distance between the glazing panes provided by the spacer incorporating a shim is preferably from 1 mm (e.g. 1.0 mm) to 20 mm. Generally the width (i.e. height) of the spacer before incorporation in the laminated glazing will be greater than the predetermined distance because the external portion of the spacer, being rubber, is compressed (with consequent distortion) firmly against the surfaces of the glazing sheets when pressure is applied to the glazing sheets between which it is sandwiched. This compression of the rubber is advantageous because it provides a better seal between the spacer and surface of the glazing sheets.

Preferably, each glazing pane comprises a glass pane (most preferably of soda lime glass). Generally any glass is suitable including laminated (e.g. with a PVB interlayer) or toughened glass.

The present invention is of particular advantage when the glass pane is a toughened glass pane because toughened glass panes often have distortions on the surface. Previously, this has contributed to the edge bubble problem, especially when pre-formed tapes (e.g. with acrylic adhesive tapes on the surface) have been used as a spacer. It is a surprising advantage of the present invention that by incorporating a shim in the spacer, trapped air or leakage and the consequent edge bubble problem is reduced or eliminated even when used on toughened glass panes.

It is advantageous if the laminated glazing further comprises a secondary seal applied to the periphery of the glazing (i.e. outside the spacer). The material of the secondary seal preferably comprises polysulphide, polyurethane or silicone.

Generally the number of glazing panes and interlayers in the laminated glazing will be determined by the particular application for which the glazing is intended. In one embodiment of the present invention there may be two glazing panes and a single interlayer situated between them. In other embodiments there may be three glazing panes and two interlayers, or four glazing panes and three interlayers, each interlayer being positioned between two glazing panes. Further numbers of glazing panes (e.g. 5, 6, 7 or more) and interlayers (e.g. 4, 5, 6 or more respectively) may be used.

Preferably, the rubber portion of the spacer is bonded to each glazing pane. If the rubber is butyl rubber this may conveniently be achieved by raising the temperature of the butyl rubber slightly in order to increase its tack and by pressing each glazing pane on to the tacky rubber of the spacer.

In order to further reduce the edge bubble problem, it is preferred if the spacer has been pre-treated to reduce the amount of gas in the rubber portion. Preferably the rubber portion of the spacer is substantially free of gas. More preferably said rubber portion is entirely free of gas. The amount of gas in the rubber portion is such that no bubbles occur at the interlayer-spacer interface and at the glass-spacer interface. The pre-treatment may comprise heating the spacer to a predetermined temperature for a predetermined time before incorporation into the laminated glazing. Optionally, the heating may be carried out under reduced pressure.

The predetermined temperature may be at least 60°C, preferably at least 65°C, even more preferably at least 70°C, even more preferably at least 75°C, even more preferably from 80°C to 200°C, even more preferably from 90°C to 175°C, even more preferably from 100°C to 150°C, even more preferably from 100°C to 130°C, even more preferably from 100°C to 120°C, even more preferably from 100°C to 115°C, most preferably from 100°C to 110°C. Temperatures no greater than 200°C are preferred to avoid the rubber portion becoming very soft and losing its shape.

The preferred predetermined time will depend to a certain extent on the predetermined temperature and the pressure under which the heating is carried out. The predetermined time may be at least 1 hour, preferably at least 2 hours, more preferably at least 3 hours, even more preferably at least 4 hours, even more preferably at least 6 hours, even more preferably at least 8 hours, most preferably at least 14 hours.

The reduced pressure (if used) is preferably 100 mbar or below, more preferably 50 mbar or below, even more preferably 20 mbar or below, even more preferably 10 mbar or below, most preferably 5 mbar or below.

Generally, if the predetermined temperature is at least 100°C then the heating may be done at atmospheric pressure. If the predetermined temperature is lower and/or the predetermined time is low, heating under reduced pressure is advantageous.

The pre-treatment may comprise
heating the spacer to at least 65°C for at least 8 hours under a reduced pressure of at most 10 mbar, preferably at most 5 mbar, or
heating the spacer to at least 70°C for at least 7 hours under a reduced pressure of at most 10 mbar, preferably at most 5 mbar, or
heating the spacer to at least 75°C for at least 6 hours, preferably at least 7 hours, under a reduced pressure of at most 10 mbar, preferably at most 5 mbar, or
heating the spacer to at least 90°C for at least 5 hours, preferably at least 6 hours, under a reduced pressure of at most 5 mbar, or
heating the spacer to at least 95°C for at least 4 hours under a reduced pressure of at most 10 mbar, preferably at most 5 mbar, or
heating the spacer to at least 100°C for at least 2 hours, preferably at least 3 hours, more preferably at least 4 hours, under a reduced pressure of at most 5 mbar, or
heating the spacer to at least 100°C for at least 6 hours;
before incorporation into the laminated glazing.

In a second aspect, the present invention provides a process for producing a fire-resistant laminated glazing as set out in claim 11.

The spacer may be applied to at least one glazing pane either manually or automatically by a robot or other mechanical device.

In a preferred embodiment of the present invention, the interlayer is cast by filling the cavity with the fluid precursor (which will usually be a dispersion or a solution) through an aperture in the spacer and subsequently curing the fluid precursor, thereby forming an interlayer. The fluid precursor may be cured by heating the fluid precursor, or by UV irradiation. If the interlayer is formed by fluid filling in this way, it is preferred if a second aperture is made in the spacer to allow air to escape during the filling of the cavity with the fluid precursor.

In a further aspect, the present invention provides a fire-resistant laminated glazing comprising at least two glazing panes and at least one transparent intumescent interlayer between the glazing panes, said glazing panes being separated by a spacer extending at least partially around their peripheries so as to define a cavity to contain said interlayer, wherein the spacer comprises a shim for controlling the separation between the glazing panes to a predetermined distance and a rubber portion at least partially enclosing the shim, and wherein the interlayer comprises an alkali metal silicate, wherein the spacer has been pre-treated by heating the spacer to at least 100°C for a predetermined time and/or heating the spacer to at least 60°C under reduced pressure for a predetermined time, wherein the predetermined time is at least 2 hours, and wherein the reduced pressure is 20 mbar or below.

Fire-resistant laminated glazings, as described in this application, may be used in many areas of glass use. In particular, the fire-resistant laminated glazings may be used in buildings (including as components in external or internal windows) or as components in multiple glazing units.

It will be appreciated that optional features applicable to one aspect of the invention can be used in any combination, and in any number. Moreover, they can also be used with any of the other aspects of the invention in any combination and in any number. This includes, but is not limited to, the dependent claims from any claim being used as dependent claims for any other claim in the claims of this application. For example, the aspects of the process according to the first aspect of the present invention may also be used in the second aspect of the invention with appropriate modification.

Embodiments of the present invention will now be described with reference to the drawings in which:
**Figure 1** illustrates examples of suitable spacers showing different types of shims that may be used in the invention;
**Figure 2** illustrates the assembly of a laminated glazing using a spacer with a shim for cast-in-place lamination for a fire resistant glazing;
**Figure 3** shows an optical image of the surface of an untreated spacer; and
**Figure 4** shows an optical image of the surface of a spacer that has been heated at 90°C at 10mbar for 18 hours.

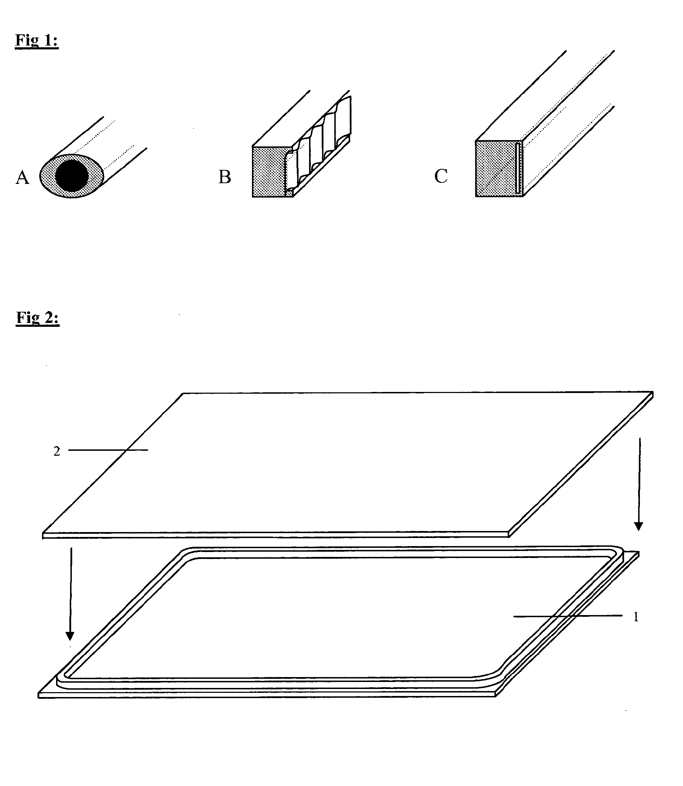

Figure 1 shows a number of spacers according to the present invention. Spacer A is a cored butyl, EPDM (ethylene propylene diene monomer) cord with butyl outer. Spacer B is an extruded butyl strip with corrugated aluminium or plastic shim. Spacer C is an extruded butyl with metal or plastic shim / thickness regulating spacer.

Figure 2 illustrates the assembly of the laminated glazing in which the spacer is applied to a first pane of glass 1 and a second pane 2 laid on the top. Said spacer is applied 3mm from the edge to allow for a secondary seal.

The material that the spacer is made from is preferably sufficiently soft to allow for good contact properties on the two glass surfaces whilst also being capable of producing a uniform cavity by the production process in assembling the glass cells. The production of a reproducible and uniform thickness of cavity is achieved by having a solid thickness regulating core (the shim) in the spacer material. The overall thickness of the spacer material should be greater than the desired final thickness to allow for the unevenness of the toughened glasses as this will be compressed during the assembly process to the required final thickness.

The adhesion of the spacer material to glass should be high to ensure no leakage of solution from the cell prior to curing and also no leakage into the cell after installation. This is achieved by using a (butyl) rubber sealant which has high adhesion to glass and very good moisture barrier properties. The use of a secondary sealant such as polysulphide or polyurethane is also desired to give the sealed unit more structural stability.

The spacers comprise a rubber (preferably butyl rubber) based exterior and a solid central core or shim which limits the compression of the spacer when fabricating the unit to ensure the glasses remain a fixed distance apart. This distance is preferably from 1 mm to 20 mm depending on the thickness of the reinforcement core (i.e. shim). More preferably it should be in the range 2 mm to 8 mm and even more preferably in the range 3 mm to 6 mm. The solid core or shim may be produced from either metal or plastic materials.

The spacer may be subjected to a combination of heating and reduced pressure pre-treatment prior to glass cell manufacture to remove air and volatile gases.

The exact conditions of preparation will vary depending on the composition, thickness and volume of the edge spacer tape to be used. This will then allow the specially prepared spacer to be used for a fire resistant glazing application comprising an alkali metal silicate interlayer. No or few bubbles will form at the interlayer-spacer and glass-spacer interfaces after the thermal curing process.

The fully degassed reinforced spacer may be applied to the glass either manually or automatically and then the glass cell may be assembled manually or automatically using commercial technologies. A secondary seal may be applied to the periphery of the cell to increase the mechanical stability, this can be chosen from those commercially available, for example polysulphide, polyurethane and silicone.

After assembly of the glass cell a hole is made in one corner of the unit and a nozzle is inserted to fill it with the alkali metal silicate solution. An air bleed hole is made at the opposite end of the unit to allow air to escape during the filling process. The prepared solution is dispensed into the unit using specialized equipment and after filling has been completed the unit is finally sealed to ensure no solution leakage. The filled glass unit is then placed into a thermal curing oven and subjected to a suitable curing cycle to convert the liquid solution to a solid interlayer.

Fire retardant glazings using these production techniques can be produced at sizes up to 3.5 m x 2.5 m having good optical properties with no defects or edge bubbles.

The invention is further illustrated by the following Examples.

### Example 1

A number of cells were prepared using two panes of annealed glass, 300mm × 150mm, and a spacer comprising an extruded butyl strip containing a corrugated aluminium shim 4.8mm high, (Microseal ™ manufactured by Truseal Technologies Inc., Solon, Ohio, USA). The sample of tape to prepare each cell received a different treatment, tabulated below in Table 1.

The spacer tape was applied to a first pane of glass 1 as shown in Figure 2 and the second pane 2 laid on the top, the whole assembly was then heated to 40°C and pressed so the metal shim touched both panes of glass. The thickness of the cavity then corresponded exactly to the height of the shim.

Two holes were made in the spacer in opposite corners and an aqueous alkali metal silicate solution was injected, one hole acted as a vent. Once the cell was full the holes were sealed by inserting a butyl plug. Thermal curing was carried out by heating to 90°C for 6 hours. Table 1 shows results for each of the different treatments, showing where bubbles appeared between the butyl and the silicate, and also the butyl and the glass.

**Table 1: Results of different pre-treatment regimes on the spacer tape of Example 1.**

| Sample | Treatment | | | Bubbles present at interface after 90°C cure | |
|---|---|---|---|---|---|
| | T / °C | Time / h | Vacuum | Butyl/ silicate | Butyl/glass |
| 1 | 55 | 14 | Yes | Many bubbles | Many bubbles |
| 2 | 65 | 14 | Yes | None | None |
| 3 | 65 | 8 | Yes | Few small | Few |
| 4 | 75 | 14 | Yes | None | None |
| 5 | 75 | 8 | Yes | Very few | None |
| 6 | 80 | 14 | Yes | None | None |
| 7 | 80 | 8 | Yes | Few small | Few small |
| 8 | 90 | 14 | Yes | None | None |
| 9 | 90 | 6 | Yes | Very few | None |
| 10 | 100 | 14 | Yes | None | None |
| 11 | 100 | 8 | Yes | None | None |
| 12 | 100 | 4 | Yes | None | None |
| 13 | 90 | 14 | No | Many bubbles | Many bubbles |
| 14 | 100 | 6 | No | Few bubbles | Few bubbles |
| 15 | 110 | 6 | No | Very few | Very few |
| 16 | 50°C/14h/100% humidity | | | Few bubbles | Many bubbles |
| 17 | No treatment | | | Many bubbles | Many bubbles |

| | | | | | |
|---|---|---|---|---|---|
| NB: vacuum samples reduced to pressure of 5mbar. | | | | | |

### Example 2

Three identical cells were prepared using annealed glass 300mm × 150mm using as spacer a cored butyl (Polyshim ™ manufactured by Tremco Illbruck Ltd., Wigan ,UK). The spacer comprises butyl extruded around an EPDM cord of 4.8mm diameter. The assembled cells were heated to 50°C and the spacer compressed to the thickness of the cord. Two of the cells were heated for 14 hours at 90°C, one at atmospheric pressure and one at a reduced pressure of 5mbar. The three cells were filled with an aqueous alkali metal silicate solution and cured at 90°C for 6 hours. The results are tabulated in Table 2, below.

**Table 2: results of different treatment regimes on the spacer of Example 2.**

| Sample number | Treatment Regime | | Result |
|---|---|---|---|
| | Heat | Vacuum | |
| 1 | 20°C | No | Large bubbles along butyl-silicate interface and large areas of bubbles between butyl and glass. |
| 2 | 90°C | No | Bubbles on butyl-silicate interface and large areas of bubbles between butyl and glass. |
| 3 | 90°C | Yes | No bubbles |

### Example 3

A glass cell was prepared using two panes of 5mm toughened glasses at a size of 2.3m × 1.2m and Microseal butyl strip, with a 4.8mm shim, having previously been heat treated and degassed. The cells were assembled as described in Example 1, and then passed through heated rollers at ~ 40°C to compress the tape so that the glasses are finally 4.8mm apart. A secondary seal of polysulphide approximately 3mm wide was then applied and cured.

Contact between the glass surface and the butyl spacer was continuous with no air voids, due to the ability of the tape to conform to the distortions of the glass.

The cell was filled with aqueous alkali metal silicate solution and cured at 90°C for 6 hours. There was no formation of bubbles along the butyl-silicate interface and no ingress of air into the interlayer which would be expected where discontinuity in butyl-glass bond occurs.

### Optical Microscopy of Microseal Tape

Analysis of the structure of a surface of Microseal tape that would be in contact with the interlayer was undertaken in order to determine whether the surface topography changes upon pre-treatment. Microseal was provided on the original backing tape in two states: untreated and heated to 90°C at 10mbar for 18 hours.

Observations showed that there was a visual difference in the surface structure of the specimens provided, and therefore optical microscopy (Wild, with coaxial and incident reflected light illumination) was undertaken to record these.

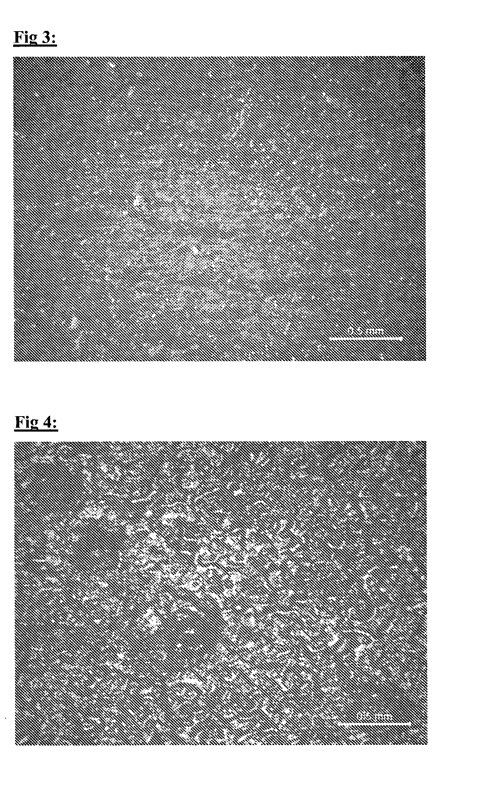

Optical images are shown in Figures 3 (untreated) and 4 (treated at 90°C under vacuum). The untreated sample is relatively smooth, whereas the specimen treated at 90 °C shows regions of what appear to be large broken bubbles and pores that have opened and widened, which is consistent with volatile gases having been driven off. This physical change in the surface of the rubber is also consistent with the hypothesis that the problem of bubbles is caused by the release of gases from the spacer upon thermal curing of the glazing.

### Contact Angle of Microseal Tape

The contact angle of a surface of a number of samples of Microseal tape was analysed in order to determine whether pre-treatment causes a change in the surface chemistry of the rubber. Table 3 shows contact angle results using water for samples that were untreated; treated at 55°C, 75°C and 90°C at 10mbar for 18 hours; and treated at 55°C and 75°C at atmospheric pressure for 18 hours. The results show that the contact angle of the surface of the rubber is unchanged by any of the pre-treatments. This indicates that the surface chemistry, at least in terms of hydrophobicity, is unchanged by the pre-treatments. This is consistent with the optical microscopy results which show that the pre-treatments cause a physical change in the surface of the rubber.

**Table 3: effect of different pre-treatments on contact angle of spacer surface**

| | H₂0 | |
|---|---|---|
| Untreated | 1.30 | 1.30 |
| | 1.30 | 1.25 |
| | 1.30 | 1.25 |
| | 1.35 | 1.30 |
| | 1.30 | 1.20 |
| | Average = | 1.3 |
| | Contact Angle= | 123.16 |
| 55°C Vac | 1.25 | 1.20 |
| | 1.20 | 1.30 |
| | 1.40 | 1.40 |
| - | 1.20 | 1.25 |
| - | 1.35 | 1.35 |
| | Average = | 1.3 |
| | Contact Angle= | 123.16 |
| 75°C Vac | 1.40 | 1.30 |
| | 1.30 | 1.25 |
| | 1.30 | 1.35 |
| - | 1.40 | 1.35 |
| | 1.30 | 1.25 |
| | Average = | 1.3 |
| | Contact Angle= | 123.16 |
| 90°C Vac | 1.45 | 1.25 |
| | 1.30 | 1.25 |
| | 1.35 | 1.35 |
| | 1.35 | 1.30 |
| | 1.35 | 1.30 |
| | Average = | 1.3 |
| | Contact Angle= | 123.16 |
| 55°C ATMOS | 1.35 | 1.25 |
| | 1.35 | 1.25 |
| | 1.40 | 1.30 |
| | 1.45 | 1.35 |
| | 1.30 | 1.35 |
| | Average = | 1.3 |
| | Contact Angle= | 123.16 |
| 75°C ATMOS | 1.25 | 1.35 |
| | 1.25 | 1.30 |
| | 1.40 | 1.35 |
| | 1.35 | 1.30 |
| | 1.25 | 1.30 |
| | Average = | 1.3 |
| | Contact Angle= | 123.16 |
| 90°C ATMOS | 1.30 | 1.30 |
| | 1.30 | 1.25 |
| | 1.30 | 1.35 |
| | 1.30 | 1.30 |
| | 1.35 | 1.30 |
| | Average = | 1.3 |
| | Contact Angle= | 123.16 |

This invention allows the commercial production of thermally cured, fire resistant, water based alkali metal silicate fire retardant glazings with good cosmetic properties and no or few edge bubbles to be produced by a cast-in-place production technique. Alternative commercially available products of this type currently use Thermoplastic Spacer Technology (TPS) which has the disadvantage of requiring high capital cost equipment. This present invention allows for a cost effective and flexible manufacturing process to be used to produce fire resistant glazings either manually or automatically. The use of the TPS system restricts this to a fully automatic process and due to the high capital cost there is a need for a high volume throughput to make it commercially viable.

## Claims

1. A fire-resistant laminated glazing comprising at least two glazing panes and at least one transparent intumescent interlayer between the glazing panes, said glazing panes being separated by a spacer extending at least partially around their peripheries so as to define a cavity to contain said interlayer, wherein the spacer comprises a shim for controlling the separation between the glazing panes to a predetermined distance and a rubber portion at least partially enclosing the shim, and wherein the interlayer comprises an alkali metal silicate, wherein the amount of gas in the rubber portion is such that no bubbles occur at an interlayer-spacer interface and at a glass-spacer interface.

2. A laminated glazing as claimed in claim 1, wherein the rubber portion comprises butyl rubber and/or polyisobutylene.

3. A laminated glazing as claimed in any one of the preceding claims, wherein the cross-section of the shim is substantially circular or oval, generally square or rectangular, or the shim is corrugated.

4. A laminated glazing as claimed in any one of the preceding claims, wherein the predetermined distance is from 1 mm to 20 mm, preferably 2 mm to 16 mm, more preferably 2 mm to 12 mm and most preferably 2 mm to 8 mm.

5. A laminated glazing as claimed in any one of the preceding clams wherein the diameter of the spacer before its incorporation in the laminated glazing is greater than the predetermined distance.

6. A laminated glazing as claimed in any one of the preceding claims, further comprising a secondary seal.

7. A laminated glazing as claimed in any one of the preceding claims, comprising three glazing panes and two interlayers, or four glazing panes and three interlayers, each interlayer being positioned between two glazing panes.

8. A laminated glazing as claimed in any one of the preceding claims, wherein the rubber portion of the spacer is bonded to each glazing pane.

9. A laminated glazing as claimed in any one of the preceding claims, wherein the rubber portion of the spacer is substantially free of gas.

10. A laminated glazing as claimed in any one of the preceding claims, wherein the spacer has been pre-treated to reduce the amount of gas in the rubber portion.

11. A process for producing a fire-resistant laminated glazing, the process comprising
a) providing at least two glazing panes,
b) separating the two glazing panes with a spacer extending at least partially around the peripheries of the glazing panes so as to define a cavity to contain an interlayer,
c) filling the cavity with a fluid precursor,
d) curing the fluid precursor to form a transparent intumescent interlayer,
wherein the spacer comprises a shim for controlling the separation of the panes to a predetermined distance and a rubber portion at least partially enclosing the shim, and wherein the interlayer comprises an alkali metal silicate, further comprising pre-treatment of the spacer prior to step b) by heating the spacer to at least 100°C for a predetermined time and/or heating the spacer to at least 60°C under reduced pressure for a predetermined time, wherein the predetermined time is at least 2 hours, and wherein the reduced pressure is 20 mbar or below.

12. A fire-resistant laminated glazing comprising at least two glazing panes and at least one transparent intumescent interlayer between the glazing panes, said glazing panes being separated by a spacer extending at least partially around their peripheries so as to define a cavity to contain said interlayer, wherein the spacer comprises a shim for controlling the separation between the glazing panes to a predetermined distance and a rubber portion at least partially enclosing the shim, and wherein the interlayer comprises an alkali metal silicate, wherein the spacer has been pre-treated by heating the spacer to at least 100°C for a predetermined time and/or heating the spacer to at least 60°C under reduced pressure for a predetermined time, wherein the predetermined time is at least 2 hours, and wherein the reduced pressure is 20 mbar or below.

## Patentansprüche

1. Feuerfeste Verbundverglasung, umfassend zumindest zwei Verglasungsscheiben und zumindest eine transparente intumneszente Zwischenschicht zwischen den Verglasungsscheiben, wobei die Verglasungsscheiben durch einen Abstandhalter getrennt sind, der sich zumindest teilweise um ihre Umfänge erstreckt, so dass ein Hohlraum zur Aufnahme der Zwischenschicht gebildet ist, wobei der Abstandhalter ein Abstandsstück zum Einstellen des Abstands zwischen den Verglasungsscheiben auf einen vorgegebenen Abstand und ein Gummiteil umfasst, welcher das Abstandsstück zumindest teilweise einfasst und wobei die Zwischenschicht ein Alkalimetall-Silikat umfasst, wobei die Menge von Gas in dem Gummiteil derart ist, dass an einer Zwischenschicht-Abstandhalter-Kontaktfläche und an einer Glas-Abstandhalter-Kontaktfläche keine Blasen auftreten.

2. Verbundverglasung nach Anspruch 1, wobei der Gummiteil Butyl-Gummi und/oder Polyisobutylen umfasst.

3. Verbundverglasung nach einem der vorhergehenden Ansprüche, wobei der Querschnitt des Abstandsstücks im Wesentlichen kreisförmig oder oval, allgemein quadratisch oder rechteckig ist oder das Abstandsstück wellig ist.

4. Verbundverglasung nach einem der vorhergehenden Ansprüche, wobei der vorgegebene Abstand zwischen 1 mm und 20 mm liegt, vorzugsweise zwischen 2 mm und 16 mm, insbesondere bevorzugt zwischen 2 mm und 12 mm und am meisten bevorzugt zwischen 2 mm und 8 mm.

5. Verbundverglasung nach einem der vorhergehenden Ansprüche, wobei der Durchmesser des Abstandshalters vor dessen Einbau in die Verbundverglasung größer als der vorgegebene Abstand ist.

6. Verbundverglasung nach einem der vorhergehenden Ansprüche, ferner umfassend eine zusätzliche Dichtung.

7. Verbundverglasung nach einem der vorhergehenden Ansprüche, umfassend drei Verglasungsscheiben und zwei Zwischenschichten oder vier Verglasungsscheiben und drei Zwischenschichten, wobei jede Zwischenschicht zwischen jeweils zwei Verglasungsscheiben angeordnet ist.

8. Laminierte Verglasung nach einem der vorhergehenden Ansprüche, wobei der Gummiteil des Abstandshalters mit jeder der Verglasungsscheiben verklebt ist.

9. Verbundverglasung nach einem der vorhergehenden Ansprüche, wobei der Gummiteil des Abstandshalters im Wesentlichen frei von Gasen ist.

10. Laminierte Verglasung nach einem der vorhergehenden Ansprüche, wobei der Abstandshalter zur Verringerung der Gasmenge in dem Gummiteil vorbehandelt ist.

11. Verfahren zur Herstellung einer feuerfesten Verbundverglasung, wobei das Verfahren umfasst:
a) Bereitstellen von zwei Verglasungsscheiben
b) Trennen der beiden Verglasungsscheiben mit einem Abstandshalter, der sich zumindest teilweise um die Umfänge der Verglasungsscheiben erstreckt und so einen Hohlraum zur Aufnahme einer Zwischenschicht definiert,
c) Füllen des Hohlraums mit einem flüssigen Ausgangsstoff,
d) Härten des flüssigen Ausgangsstoffs zur Bildung einer transparenten, intumneszenten Schicht,
wobei der Abstandshalter ein Abstandsstück zum Einstellen der Trennung der Scheiben auf einen vorgegebenen Abstand und einen Gummiteil umfasst, welcher das das Abstandsstück zumindest teilweise umgibt und wobei die Zwischenschicht ein Alkalimetall-Silikat umfasst, ferner umfassend die Vorbehandlung des Abstandshalters vor Schritt b) durch Aufheizen des Abstandshalters auf wenigstens 100° C für eine vorgegebene Zeitdauer und/oder Aufheizen des Abstandshalters auf wenigstens 60° C bei reduziertem Druck für eine vorgegebene Zeitdauer, wobei die vorgegebene Zeitdauer zumindest zwei Stunden beträgt und wobei der reduzierte Druck 20 mbar oder weniger beträgt.

12. Feuerfeste Verbundverglasung mit zumindest zwei Verglasungsscheiben und zumindest einer transparenten, intumneszenten Zwischenschicht zwischen den Verglasungsscheiben, wobei die Verglasungsscheiben durch einen Abstandshalter getrennt sind, welcher sich zumindest teilweise um ihre Umfänge herum erstreckt, um so einen Hohlraum zur Aufnahme der Zwischenschicht zu bilden, wobei der Abstandshalter ein Abstandsstück zum Einstellen des Abstands zwischen den Verglasungsscheiben auf einen vorgegebenen Abstand und einen Gummiteil umfasst, welcher das Abstandsstück zumindest teilweise umgibt, und wobei die Zwischenschicht ein Alkalimetall-Silikat umfasst, wobei der Abstandshalter durch Erhitzen des Abstandshalters auf wenigstens 100° C für eine vorgegebene Dauer und/oder Erhitzen des Abstandshalters auf wenigstens 60° C bei reduziertem Druck für eine vorgegebene Dauer vorbehandelt wurde, wobei die vorgegebene Dauer wenigstens zwei Stunden beträgt und wobei der reduzierte Druck 20 mbar oder weniger beträgt.

## Revendications

1. Vitrage feuilleté résistant au feu qui comprend au moins deux panneaux de vitrage et au moins une couche intermédiaire intumescente transparente entre lesdits panneaux de vitrage, lesdits panneaux de vitrage étant séparés par un séparateur qui s'étend au moins partiellement autour de leurs périphéries de façon à définir une cavité destinée à contenir ladite couche intermédiaire, ledit séparateur comprenant une cale destinée à contrôler la séparation entre lesdits panneaux de vitrage, selon une distance prédéterminée, et une partie en caoutchouc qui enferme au moins partiellement ladite cale, et dans lequel ladite couche intermédiaire comprend un silicate de métal alcalin, la quantité de gaz dans ladite partie en caoutchouc étant telle qu'aucune bulle ne se forme au niveau d'une interface couche intermédiaire/séparateur et au niveau d'une interface verre/séparateur.

2. Vitrage feuilleté selon la revendication 1, dans lequel ladite partie en caoutchouc comprend du caoutchouc butylique et/ou du polyisobutylène.

3. Vitrage feuilleté selon l'une quelconque des revendications précédentes, dans lequel la section transversale de ladite cale est sensiblement circulaire ou ovale, généralement carrée ou rectangulaire, ou ladite cale est ondulée.

4. Vitrage feuilleté selon l'une quelconque des revendications précédentes, dans lequel ladite distance prédéterminée est comprise entre 1 mm et 20 mm, de préférence entre 2 mm et 16 mm, de préférence entre 2 mm et 12 mm, et de préférence entre 2 mm et 8 mm.

5. Vitrage feuilleté selon l'une quelconque des revendications précédentes, dans lequel le diamètre dudit séparateur avant son intégration audit vitrage feuilleté est supérieur à ladite distance prédéterminée.

6. Vitrage feuilleté selon l'une quelconque des revendications précédentes, qui comprend en outre un joint secondaire.

7. Vitrage feuilleté selon l'une quelconque des revendications précédentes, qui comprend trois panneaux de vitrage et deux couches intermédiaires, ou quatre panneaux de vitrage et trois couches intermédiaires, chaque couche intermédiaire étant positionnée entre deux panneaux de vitrage.

8. Vitrage feuilleté selon l'une quelconque des revendications précédentes, dans lequel ladite partie en caoutchouc dudit séparateur est reliée à chaque panneau de vitrage.

9. Vitrage feuilleté selon l'une quelconque des revendications précédentes, dans lequel ladite partie en caoutchouc dudit séparateur est sensiblement exempte de gaz.

10. Vitrage feuilleté selon l'une quelconque des revendications précédentes, dans lequel ledit séparateur a été prétraité afin de réduire la quantité de gaz dans ladite partie en caoutchouc.

11. Processus de fabrication d'un vitrage feuilleté résistant au feu, qui comprend
a) le fait de fournir au moins deux panneaux de vitrage,
b) séparer lesdits deux panneaux de vitrage avec un séparateur qui s'étend au moins partiellement autour des périphéries desdits panneaux de vitrage de façon à définir une cavité destinée à contenir une couche intermédiaire,
c) remplir ladite cavité avec un précurseur liquide,
d) faire durcir ledit précurseur liquide afin de former une couche intermédiaire intumescente transparente,
dans lequel ledit séparateur comprend une cale destinée à contrôler la séparation desdits panneaux selon une distance prédéterminée, et une partie en caoutchouc qui enferme au moins partiellement ladite cale, et dans lequel ladite couche intermédiaire comprend un silicate de métal alcalin, qui comprend en outre le prétraitement dudit séparateur avant l'étape b), en chauffant ledit séparateur à au moins 100°C pendant une durée prédéterminée et/ou en chauffant ledit séparateur à au moins 60°C sous une pression réduite pendant une durée prédéterminée, ladite durée prédéterminée étant d'au moins 2 heures, et dans lequel ladite pression réduite est de 20 mbar ou moins.

12. Vitrage feuilleté résistant au feu qui comprend au moins deux panneaux de vitrage et au moins une couche intermédiaire intumescente transparente entre lesdits panneaux de vitrage, lesdits panneaux de vitrage étant séparés par un séparateur qui s'étend au moins partiellement autour de leurs périphéries de façon à définir une cavité destinée à contenir ladite couche intermédiaire, ledit séparateur comprenant une cale destinée à contrôler la séparation entre lesdits panneaux de vitrage, selon une distance prédéterminée, et une partie en caoutchouc qui enferme au moins partiellement ladite cale, et dans lequel ladite couche intermédiaire comprend un silicate de métal alcalin, ledit séparateur ayant été prétraité en le chauffant à au moins 100°C pendant une durée prédéterminée et/ou en le chauffant à au moins 60°C sous une pression réduite pendant une durée prédéterminée, ladite durée prédéterminée étant d'au moins 2 heures, et ladite pression réduite étant de 20 mbar ou moins.
